# EUROPÄISCHE PATENTSCHRIFT

(11) **EP 4 382 456 B1**
(45) Veröffentlichungstag und Bekanntmachung des Hinweises auf die Patenterteilung: **26.03.2025**
(21) Anmeldenummer: 22212172.5
(22) Anmeldetag: 08.12.2022
(51) Int. Cl.: B65G 17/48, B65G 47/61

(54) **VERFAHREN ZUM VEREINZELTEN BELADEN VON MITNEHMERN EINES HÄNGEFÖRDERERS MIT KLEIDERBÜGELN ZUM TRANSPORTIEREN VON HÄNGEWARE, ÜBERGABESTATION SOWIE ENTSPRECHENDER HÄNGEFÖRDERER**
METHOD FOR THE INDIVIDUAL LOADING OF ROLLER CARS OF A CONVEYOR WITH CLOTHES HANGERS FOR TRANSPORTING SUSPENDED GOODS, TRANSFER STATION AND CORRESPONDING CONVEYOR
PROCÉDÉ DE CHARGEMENT INDIVIDUEL DE CHARIOTS ROULANTS D'UN CONVOYEUR AÉRIEN AVEC CINTRES POUR LE TRANSPORT DE MARCHANDISES SUSPENDUES, POSTE DE TRANSFERT ET CONVOYEUR AÉRIEN CORRESPONDANT

(43) Veröffentlichungstag der Anmeldung: 12.06.2024
(73) Patentinhaber: BEUMER Group GmbH & Co. KG, 59269 Beckum (DE)
(72) Erfinder: Neugebauer, Jürgen, 8102 Semriach (AT); Sandor, Nicolas, 8583 Edelschrott (AT)
(74) Vertreter: Angerhausen, Christoph

(56) Entgegenhaltungen:
- EP-A1- 2 345 607

## Beschreibung

Die Erfindung geht aus von einem Verfahren zum vereinzelten Beladen von Mitnehmern eines Hängeförderers mit Ladungsträgern zum Transportieren von Hängeware. Aus der Druckschrift EP 2 345 607 A1 ist eine Hängeförderanlage mit Rollläufern bekannt, bei der ein Hakenelement um eine sich in Transportrichtung des Rollläufers erstreckende Schwenkachse schwenkend angeordnet ist, wobei das Hakenelement hierbei in eine Beladungsposition nach oben schwenkbar ist, in welcher das Hakenelement mit seinem freien Hakenendabschnitt nach oben steht, um ein daran angehängtes Eingriffstück eines zu transportierenden Objekts am Rollläufer angehängt halten zu können und zeigt somit den Oberbegriff des Anspruchs 1 sowie des Anspruchs 6. Eine ähnliche Vorrichtung ist bereits aus der Druckschrift EP 1 914 182 B1 bekannt. Diese verwendet im Wesentlichen ein an einer Übergabestation befestigtes Übergabe-Rad, welches um eine Drehachse antreibbar ist, und welches über seinen Umfang verteilt eine Anzahl Ausnehmungen aufweist, welche jeweils zur Aufnahme eines Mitnehmers ausgebildet sind. Eine Zuführ-Schiene für Mitnehmer ragt bis an das Übergabe-Rad heran, durch welche jeweils einen Mitnehmer in eine Ausnehmung in einem Winkel von etwa 45 Grad eingespeist wird. An einem Ende einer Transportschiene für die Zuführung von Kleiderbügeln, die an der Station befestigt ist, ist ein Übergabeschlitz angeordnet. Das Übergabe-Rad und der ÜbergabeSchlitz sind so angeordnet, dass unterhalb des freien Endes eines Hakens eines Kleiderbügels die Halteöffnung eines in einer Ausnehmung gehaltenen Mitnehmers positioniert ist, sodass der Kleiderbügel in die Halteöffnung herabfallen kann. Nach der Aufnahme des Kleiderbügels wird das Übergabe-Rad verschwenkt, so dass der beladene Mitnehmer in eine vertikale Position überführt wird und anschließend aus dem Übergabe-Rad ausgeschleust werden kann.

Eine weitere Vorrichtung ist bekannt aus der Druckschrift WO 2020/007870 A1. Diese offenbart eine Beladestation zum Beladen von Rolladaptern Kleiderbügeln. Zum Vereinzelten Beladen eines Rolladapters mit einem Kleiderbügel weist diese im Wesentlichen eine Vereinzelungseinrichtung auf, die seitlich zu einer Staustrecke der Rolladapter angeordnet ist und erste und zweite Stoppelemente aufweist, welche quer zur Staustrecke beweglich gelagert sind und selektiv in einen Förderweg der Rolladapter hinein bewegt werden, um diese zu stauen bzw. aus diesem herausbewegt werden, um eine vereinzelte Bewegung der Rolladapter in der Förderrichtung. Die Stoppelemente werden angesteuert durch eine Steuereinheit, welche ein Freigabesignal durch einen Schalter erhält, welcher durch einen auf einen Rolladapter aufgeladenen Kleiderbügel aus einer Normalstellung in eine Vereinzelungsstellung bewegt wird, wenn der Kleiderbügel durch die Transportöffnung eines Rolladapters hindurchgetreten ist.

Die aus dem Stand der Technik bekannten Lösungen weisen jeweils den Nachteil auf, dass diese einen hohen konstruktiven Aufwand aufweisen und dementsprechend kostenintensiv in der Bereitstellung und fehleranfällig in ihrem Betrieb sind.

Es ist daher die Aufgabe der vorliegenden Erfindung, ein Verfahren bzw. eine Vorrichtung zum vereinzelten Beladen von Mitnehmern eines Hängeförderers mit Kleiderbügeln derart zu verbessern, dass dieses einen geringeren konstruktiven Aufwand erfordert und damit einfach und kostengünstig bereitstellbar ist.

Die Aufgabe wird gelöst durch die Merkmale der unabhängigen Ansprüche. Die abhängigen Ansprüche betreffen jeweils vorteilhafte Ausführungsformen der Erfindung.

Demgemäß sieht das Verfahren die folgenden Schritte vor:
Transportieren einer Mehrzahl von Mitnehmern auf einem Mitnehmergleis entlang einer Transportrichtung durch eine Übergabestation, wobei die Mitnehmer in der Übergabestation zumindest abschnittsweise eine Beladeausrichtung aufweisen,
Fixieren eines in der Beladeausrichtung befindlichen Mitnehmers an einer Übergabeschnittstelle;
Vereinzeltes Heranführen einer Mehrzahl von Ladungsträgern mittels eines Ladungsträgerzubringers an die Übergabeschnittstelle, wobei an der Übergabeschnittstelle je ein freies Ende eines Ladungsträgerhakens in die Tragöse eines an der Übergabeschnittstelle fixierten Mitnehmers eingefädelt wird;
Überführen des beladenen Mitnehmers in eine Transportausrichtung, wobei der Mitnehmer infolge des Beladens mit dem Ladungsträger die Übergabeschnittstelle passiert, wobei das Überwinden der Übergabeschnittstelle zunächst zumindest abschnittsweise das Überführen des beladenen Mitnehmers von der Beladeausrichtung in die Transportausrichtung umfasst und dadurch bedingt anschließend den Weitertransport des Mitnehmers entlang des Mitnehmergleises umfasst. Vorzugsweise kann eine Schwerkraft des Ladungsträgers und optional eines an dem Ladungsträger befestigten Transportguts eine (zusätzliche) Hangabtriebskraft auf den Mitnehmer ausüben, die größer ist als eine Haltekraft, mit der der Mitnehmer an der Übergabeschnittstelle gehalten ist. Alternativ kann vorgesehen sein, dass ein Aktor die Übergabeschnittstelle so ansteuert, dass diese in eine Freigabeposition überführt wird, wenn detektiert wird, dass ein an der Übergabeschnittstelle wartender Mitnehmer mit einem Ladungsträger beladen wurde.

Ein Ladungsträger im Sinne der Erfindung kann jedes Halteelement sein, welches dazu eingerichtet ist, Kleidungsstücke hängend zu halten, beispielsweise ein Kleiderbügel. Ein Mitnehmer kann beispielsweise ein Rollcarrier sein. In der Beladeausrichtung kann der Öffnungsquerschnitt einer Tragöse an einem freien Ende des Mitnehmers zumindest teilweise eine horizontale Komponente aufweisen.

Die Übergabestation kann das Ende eines Stauförderers bilden, welcher mit einer Eingangsseite der Übergabestation verbunden ist. In der Beladeausrichtung kann der Mitnehmer bzw. eine gegebenenfalls imaginäre Achse der Rollen des Mitnehmers beispielsweise einen Winkel zur Vertikalen zwischen 20 und 70 Grad, bevorzugt zwischen 30 und 60 Grad aufweisen. Das Einfädeln kann dadurch erfolgen, dass ein Kleiderbügelhaken vom Kleiderbügelzubringer in die Tragöse herabfällt. Die Tragöse kann offen oder in sich geschlossen ausgebildet sein. Die Tragöse der Mitnehmer kann senkrecht zur gegebenenfalls imaginären Achse der Rollen des Mitnehmers ausgerichtet sein. Das Verfahren kann ferner das Nachrücken eines nachfolgenden Mitnehmers in die Fixierkontur aufweisen, wobei diese den nachfolgenden Mitnehmer wieder in der Beladeausrichtung fixiert. In der Transportausrichtung kann der Mitnehmer im Wesentlichen vertikal ausgerichtet von der Mitnehmerschiene herabhängen.

Das Fixieren des Mitnehmers in der Beladeausrichtung kann das Hindern des auf dem Mitnehmergleis befindlichen Mitnehmers an einem Weitertransport in Transportrichtung umfassen. Das Fixieren des Mitnehmers in der Beladeausrichtung kann ferner das im Wesentlichen vertikal ausgerichtete seitliche Abstützen des Mitnehmers umfassen. Das kann bedeuten, dass der Mitnehmer zum Passieren der Übergabeschnittstelle zunächst eine Schwenkbewegung um die Transportachse des Mitnehmers, welche der Mittelachse des Mitnehmergleises entsprechen kann, ausführt, um anschließend in die Transportrichtung, insbesondere entlang des Mitnehmergleises weiterbewegt zu werden. Die Schwenkbewegung kann insbesondere eine vertikal nach unten gerichtete Komponente umfassen.

Es kann vorgesehen sein, dass an der Übergabeschnittstelle eine Fixierkontur den Mitnehmer in Transportrichtung und in einer Ebene senkrecht zur Transportachse fixiert, wobei die durch das Beladen mit einem Ladungsträger auf die Tragöse wirkende Kraft eine Vorspannkraft eines Sperrelements der Fixierkontur überwunden wird, so dass der Mitnehmer senkrecht zur Transportachse verschwenkt wird und dadurch in Transportrichtung weiterbewegt wird. Das Sperrelement kann eine elastisch gefederte Auflagefläche aufweisen, auf welcher zumindest anteilmäßig die Gewichtskraft des Mitnehmers abgestützt ist. Beim senkrechten Verschwenken des Mitnehmers kann die Auflagefläche mitsamt dem darauf liegenden Mitnehmer nach unten ausweichen und dadurch bewirken, dass der am entgegen der Transportrichtung wirkenden Part der Fixierkontur anliegende Bereich des Mitnehmers so weit seitlich ausgelenkt wird, dass der Mitnehmer diesen Part seitlich umfahren kann. Das Sperrelement kann demnach eine Halteposition, in welcher ein in der Fixierkontur befindlicher Mitnehmer gehalten ist, und eine Freigabeposition aufweisen, in welcher der Mitnehmer die Fixierkontur passieren kann. Es kann dabei vorgesehen sein, dass wenn das Sperrelement in seine Freigabeposition bewegt wird, aus der Mitnehmer aus der Beladeausrichtung in eine im Wesentlichen vertikale Transportausrichtung verschwenkt wird. Es kann vorgesehen sein, dass die Vorspannung des Sperrelements mittels einer Feder, insbesondere einer Drehfeder erzeugt wird. Dabei kann die Feder so konfiguriert sein, dass ein unbeladener Mitnehmer von der Feder gehalten wird und ein mit einem Ladungsträger beladener Mitnehmer das Sperrelement auslenkt. Beispielsweise kann die Feder so konfiguriert sein, dass das Sperrelement zum Halten von weniger als 50 Gramm ausgebildet ist.

Es ist denkbar, dass die Mitnehmer beim Durchfahren der Übergabestation zunächst die Transportausrichtung aufweisen und anschließend im Zuge eines Weitertransports entlang des Mitnehmergleises in die Beladeausrichtung überführt werden. Hierzu kann das Mitnehmergleis im Bereich, in welchem die Mitnehmer die Transportausrichtung aufweisen, eine im Wesentlichen seitlich unverschwenkte Auflagefläche aufweisen. Im Bereich, in welchem die Mitnehmer anschließend die Beladeausrichtung aufweisen, kann das Mitnehmergleis dann eine seitlich geneigte Auflagefläche aufweisen, insbesondere in Richtung, aus welcher die Mitnehmer mit Ladungsträgern beladen werden. Der Mitnehmer kann beim Überführen von der Transportausrichtung in die Beladeausrichtung oder umgekehrt im Wesentlichen um die Transportachse der Mitnehmer verschwenkt werden, welche im Wesentlichen der Mittelachse des Mitnehmergleises entsprechen kann.

Die Erfindung betrifft ferner eine Übergabestation, insbesondere zur Ausführung eines Verfahrens nach einem der vorangehenden Ansprüche, zum vereinzelten Beladen von Mitnehmern eines Hängeförderers mit Ladungsträgern zum Transportieren von Hängeware, mit einem Mitnehmergleis zum Transportieren der Mitnehmer in einer Transportrichtung, mit einer Übergabeschnittstelle, in welcher das Mitnehmergleis zum Halten eines Mitnehmers in einer Beladeausrichtung quer zur Transportrichtung geneigt ist, und mit einer an der Übergabeschnittstelle angeordneten Fixierkontur, welche zwischen einer Sperrposition, in welcher ein Mitnehmer an der Fixierkontor gehalten ist, und einer Freigabeposition, in welcher ein Mitnehmer die Fixierkontur passieren kann, verstellbar ist, wobei die Fixierkontur durch das Beladen eines Mitnehmers mit einem Ladungsträger oder nach mittels einer Sensorik festgestellter Beladung des Mitnehmers durch einen Aktor von der Sperrposition in die Freigabeposition überführbar ist.

Die Übergabestation kann ferner eine in die Übergabeschnittstelle mündende Zuführeinrichtung für Ladungsträger zum Beladen der Beladeabschnitts eines an der Fixierkontur fixierten Mitnehmers aufweisen. Die Übergabestation kann außerdem eine Mehrzahl Mitnehmer aufweisen, welche jeweils einen Transportabschnitt zum Transportieren über das Mitnehmergleis und einen sich durch das Mitnehmergleis erstreckenden Beladeabschnitt zum Beladen der Mitnehmer mit einem Ladungsträger aufweisen.

Die Fixierkontur kann ein erstes Sperrelement aufweisen, das zwischen der Sperrposition, in welcher ein Mitnehmer senkrecht zur Transportrichtung blockiert ist, und einer Freigabeposition, in welcher der Mitnehmer senkrecht zur Transportrichtung bewegbar ist, auslenkbar ist. Das erste Sperrelement kann durch die im Zuge des Beladevorgangs auf den Beladeabschnitt des Mitnehmers wirkende kinetische Energie des Ladungsträgers derart ausgelenkt sein, dass es von der Sperrposition in die Freigabeposition überführt wird.

Der Transportabschnitt eines Mitnehmers kann insbesondere zwei parallele Rollen zum Laufen auf dem Mitnehmergleis aufweisen. Ferner kann der Transportabschnitt einen sich im Wesentlichen vertikal nach oben erstreckenden Mitnehmer aufweisen, mittels welchem der Mitnehmer beispielsweise durch eine Förderkette eines Hängeförderers entlang einer der Übergabestation vorgelagerten Zuförderstrecke antreibbar ist. Der Beladeabschnitt kann mit dem Transportabschnitt verbunden sein und sich vertikal nach unten von diesem weg erstrecken. Der Beladeabschnitt kann einen Mitnehmerkörper aufweisen, an welchen sich unterhalb daran anschließend die Tragöse erstrecken kann. Der Mitnehmerkörper kann vier Seitenflächen aufweisen, zwei in und entgegen der Transportrichtung gegenüberliegende Seiten sowie zwei quer zur Transportrichtung gegenüberliegende Seitenflächen. Der Öffnungsquerschnitt der Tragöse kann insbesondere in derselben Ebene liegen wie die Transportachse. In der Beladeausrichtung des Mitnehmers kann der Öffnungsquerschnitt der Tragöse am freien Ende des Mitnehmers zumindest teilweise eine horizontale Komponente aufweisen. Die Übergangsstation kann eine Eingangsseite zum Erhalten von Mitnehmern über eine Zuförderstrecke, und eine Ausgangsseite zum Übergeben der Rollcarrier an eine Abförderstrecke aufweisen. Das Mitnehmergleis kann die Eingangs- und die Ausgangsseite verbindenden. Das Mitnehmergleis dient zum Transportieren der Mitnehmer durch die Übergabestation. Der Erfindung liegt die Idee zugrunde, dass ein Überwinden des ersten oder des zweiten Sperrelements durch Beladen eines Mitnehmer mit einem Ladungsträger bewirkt, dass das jeweils andere Sperrelement ebenfalls überwunden wird.

Es kann vorgesehen sein, dass die Fixierkontur ferner ein zweites Sperrelement zum Sperren des Mitnehmers in Transportrichtung aufweist, wobei der Mitnehmer in der Sperrposition gegen das das zweite Sperrelement gehalten ist. Das erste Sperrelement kann dabei zwischen der Sperrposition und der Freigabeposition schwenkbeweglich verstellbar und beispielsweise mittels einer Feder vorgespannt sein.

Es kann vorgesehen sein, dass die Sensorik im Bereich der Übergabeschnittstelle auf einen Transportabschnitt des Mitnehmers gerichtet ist und dazu eingerichtet ist, das Überführen eines Mitnehmers von der Beladeausrichtung in die Transportausrichtung zu erfassen. Dadurch kann die Sensorik auf den Mitnehmer(-kopf) schauen, wenn der Leermitnehmer an der Übergabeschnittstelle wartet. Durch die Sensorik kann die Position bzw. das Drehen des Mitnehmers abgefragt werden, um festzustellen, ob die Beladung und Freigabe funktioniert hat. Ferner kann die Sensorik erfassen, ob die vor der Übergabeschnittstelle wartende Anzahl an Leercarriern in einem Sollbereich von beispielsweise 5-10 Leercarriern liegt. Es kann vorgesehen sein, dass die Sensorik zum Ausgeben eines entsprechenden Signals eingerichtet ist, wenn die Anzahl Mitnehmer außerhalb des Sollbereichs liegt. Beispielsweise kann es vorteilhaft sein, eine vorgesehene Sollanzahl Mitnehmer vor der Übergabeschnittstelle zu stauen, um einen möglichst konstanten Staudruck auf einem vorteilhaften Level zu halten. Die dicht auf dicht anstehenden Mitnehmer in Verbindung mit einem sehr kurzen Beladevorgang weisen den Vorteil auf, dass ein sehr hoher Durchsatz erzielt werden kann.

Das Mitnehmergleis kann zwei voneinander beabstandete Schienen zum Tragen je einer Rolle eines Mitnehmers aufweisen, wobei die Schwenkachse des beweglichen Sperrelements mit einer der Schienen des Mitnehmergleises fluchten kann. Der Beladeabschnitt des Mitnehmers kann sich durch die parallel voneinander beabstandeten Schienen vom auf den Schienen laufenden Transportabschnitt wegerstrecken.

Das Mitnehmergleis kann stromabwärts der Übergabeschnittstelle einen Abschnitt aufweisen, in welchem der Mitnehmer aus der Beladeausrichtung in eine Transportausrichtung, in welcher der Mitnehmer eine im Wesentlichen vertikale Position aufweist, geschwenkt wird. Das Mitnehmergleis kann dazu gegenüber seiner Ausrichtung im Übergabeabschnitt derart tordiert sein, dass es die Bewegung des Mitnehmers von einer schrägen in eine vertikale Ausrichtung unterstützt. Die der Schwenkachse gegenüberliegende Schiene kann beispielsweise stromabwärts der Übergabeschnittstelle einen Versatz oder ein Gefälle aufweisen, welches eine zum zumindest ansatzweisen Überführen des Mitnehmers von der Beladeausrichtung in die Transportrichtung entsprechende vertikale Distanz aufweist. Die Übergabestation ferner einen vor dem Übergabeabschnitt liegenden weiteren tordierten Abschnitt aufweisen, in welchem das Mitnehmergleis zunächst aus einer horizontalen in eine schräge, der Beladeausrichtung der Mitnehmer entsprechenden, Ausrichtung geneigt wird. So kann die Übergabestation an ihrer Eingangsseite und/oder ihrer Ausgangsseite eine horizontale Lauffläche aufweisen, so dass eingangsseitig und/oder ausgangsseitig entsprechend horizontal ausgerichtete Zu- und/oder Abförderer an die Übergabestation angeschlossen werden können. Das Mitnehmergleis kann ferner innerhalb der Übergabestation ein Gefälle aufweisen, so dass die Mitnehmer innerhalb der Übergabestation nicht zusätzlich angetrieben werden müssen.

Das zweite Sperrelement kann eine Anlagekante aufweisen, an welcher eine in Transportrichtung weisende Seite des Beladeabschnitts des Mitnehmers zur Anlage kommt, und wobei das erste Sperrelement eine Anlagefläche aufweisen, auf welche eine im Wesentlichen vertikal nach unten weisende Seite des Beladeabschnitts zur Anlage kommt. Die Anlagekante kann insbesondere im Bereich der Tragöse mit dieser in Anlage kommen. Die Anlagekante kann einen Innenwinkel aufweisen, welcher an eine äußere Kontur der Tragöse angepasst sein kann.

Die Breite der Fixierkontur bzw. die Breite des ersten Sperrelements kann zum Halten eines einzelnen Mitnehmers ausgebildet sein. Nachfolgende Mitnehmer können sich vor der Fixierkontur stauen, ohne dass dabei das erste Sperrelement von der Sperrposition in die Freigabeposition überführt wird. Der Übergabeabschnitt des Mitnehmergleises kann bereits vor Erreichen der Fixierkontur beginnen, so dass sich vor der Fixierkontur stauende Mitnehmer bereits vor Erreichen dieser bereits sukzessive in die Beladeposition überführt werden können. Der Fixierkontur auf der Seite des Fallschachts bzw. gegenüberliegend des beweglichen Sperrelements vorgelagert kann eine Führungswand angeordnet sein, entlang welcher in die Beladeausrichtung überführte Mitnehmer in Richtung der Fixierkontur geführt werden.

Es kann vorgesehen sein, dass sich der Transportabschnitt eines in der Fixierkontur befindlichen Mitnehmers weiterhin auf dem Mitnehmergleis befindet. Demnach kann sich der Beladeabschnitt in der Fixierkontur befinden, während die Rollen des Transportabschnitts auf dem Mitnehmergleis aufliegen. Die Tragöse eines in der Fixierkontur befindlichen Beladeabschnitts kann in dieser Position unterhalb des Fallschachts der Übergabeschnittstelle angeordnet sein, durch welchen Ladungsträger vereinzelt zugefördert und in die Tragöse des wartenden Mitnehmers eingefädelt werden.

Es kann ferner vorgesehen sein, dass sich der Transportabschnitt des in der Fixierkontur befindlichen Mitnehmers in ein Führungsprofil hineinerstreckt, das den Transportabschnitt bei der Überführung des Mitnehmers von der Belade- in die Transportausrichtung seitlich führt. Das Führungsprofil kann insbesondere im Übergang vom Übergabeabschnitt auf den nachfolgenden Transportabschnitt angeordnet sein und einen für die Überführung des Mitnehmers von der Beladeausrichtung in die Transportausrichtung entsprechendes Kurvenprofil aufweisen, das die Bewegung unterstützt.

Das zweite Sperrelement bzw. die in Transportrichtung den Weg blockierende Anlagekante kann zum Stauen einer Mehrzahl sich stromaufwärts der Fixierkontur befindender Mitnehmer ausgebildet sein. Das erste Sperrelement bzw. das federelastische Auflageelement kann derart konfiguriert sein, dass ein in der Sperrposition in der Fixierkontur befindlicher unbeladener Mitnehmer gegen die Anlagekante des zweiten Sperrelements gehalten ist.

Die Erfindung betrifft ferner einen Hängeförderer mit einer Übergabestation nach einem der vorangehenden Ansprüche, aufweisend eine an der Eingangsseite der Übergabestation angeordnete Zuförderstrecke zum Zufördern von leeren Mitnehmern, ferner aufweisend eine an die Ausgangsseite der Übergabestation angeschlossene Abförderstrecke zum Abfördern von mit Ladungsträgern beladenen Mitnehmern, sowie mit einem an den Ladungsträgerzubringer angeschlossenen Ladungsträgerförderer.

Der Hängeförderer kann ferner eine vorzugsweise stromabwärts der Übergabestation angeordnete Entladestation aufweisen, welche zum Trennen der Ladungsträger bzw. der Kleiderbügel von den Mitnehmern eingerichtet sein kann. Dabei können die beladenen Mitnehmer in Transportrichtung auf die Entladestation zubewegt werden, in der Entladestation können die Haken der Ladungsträger aus den Tragösen der Mitnehmer herausgefädelt werden und hinter der Entladestation können die dann leeren Mitnehmer weiter auf dem Mitnehmergleis und die Ladungsträger auf einer separaten Führungsschiene von den Mitnehmern wegbewegt werden. Die Entladestation kann eine Entladekontur aufweisen, welche zum Herausheben des gebogenen Hakens des Ladungsträgers aus der Tragöse eingerichtet ist, wenn der beladene Mitnehmer an der Entladekontur entlanggeführt wird. Die Entladekontur kann eine Einlaufsteigung aufweisen, welche in Transportrichtung ansteigt und eingangsseitig unterhalb der Hakenspitze des Ladungsträgers angeordnet ist. Im Zuge des Entlangführens an der Einlaufsteigung wird die Hakenspitze sukzessive bis über die Auflagefläche der Tragöse angehoben, so dass der Ladungsträger von der Tragöse getrennt werden kann. Die Einlaufsteigung kann sich ferner in Transportrichtung seitlich vom Mitnehmergleis wegerstrecken, so dass neben der vertikalen auch eine horizontale Entfädelungsbewegung vollführt wird. Hierzu kann die Entladekontur ferner eine im Wesentlichen vertikale und winklig zur Transportrichtung des Mitnehmergleises angeordnete Führungskulisse aufweisen, welche den Haken im Zuge der Bewegung entlang der Entladekontur in horizontaler Richtung vom Mitnehmergleis wegdrängt. An die Einlaufsteigung kann sich ein Auslaufgefälle anschließen, welches dazu eingerichtet ist, die dann entfädelten Ladungsträger auf die separate Führungsschiene zu überführen. Durch das Gefälle können die Ladungsträger ohne zusätzlichen Antrieb in Richtung der Führungsschiene transportiert werden. Auch am Auslaufgefälle kann seitlich die im Wesentlichen vertikale Führungskulisse angeordnet sein, welche dazu eingerichtet ist, den Ladungsträger weiter vom Mitnehmergleis wegzudrängen. An das Auslaufgefälle kann die Führungsschiene angrenzen. Die Führungsschiene kann ebenfalls ein Gefälle für den antriebslosen Transport der entfädelten Ladungsträger aufweisen.

Weitere Einzelheiten der Erfindung werden anhand der nachstehenden Figuren erläutert. Dabei zeigt:
- Fig. 1: eine perspektivische Ansicht von schräg unten einer ersten Ausführungsform der Erfindung;
- Fig. 2: eine Ansicht von unten der ersten Ausführungsform der Erfindung;
- Fig. 3: eine Seitenansicht der ersten Ausführungsform der Erfindung;
- Fig. 4: eine Ansicht eines in einer Fixierkontur gehaltenen Mitnehmers der ersten Ausführungsform der Erfindung;
- Fig. 5: eine Ansicht einer Übergabeschnittstelle einer Übergabestation gemäß der ersten Ausführungsform der Erfindung;
- Fig. 6: eine Seitenansicht einer Mehrzahl gestauter Mitnehmer in einer Übergabestation gemäß der ersten Ausführungsform der Erfindung;
- Fig. 7: eine Seitenansicht einer Mehrzahl gestauter Mitnehmer in einer Übergabestation gemäß der ersten Ausführungsform der Erfindung;
- Fig. 8: eine Seitenansicht eines über einen Kleiderbügelzubringer und auf einen in einer Fixierkontur fixierten Mitnehmer zubewegten Kleiderbügels in einer Übergabestation gemäß der ersten Ausführungsform der Erfindung;
- Fig. 9: eine Seitenansicht eines über einen Kleiderbügelzubringer und in einen in einer Fixierkontur fixierten Mitnehmer eingefädelten Kleiderbügels in einer Übergabestation gemäß der ersten Ausführungsform der Erfindung;
- Fig. 10: eine Ansicht von unten des Moments des Überführens eines elastischen Auflageelements von einer Sperrposition in eine Freigabeposition in einer Übergabestation gemäß der ersten Ausführungsform der Erfindung;
- Fig. 11: eine Ansicht in Förderrichtung auf eine Ausführungsform eines erfindungsgemäßen Hängeförderers; und
- Fig. 12: eine schematische Seitenansicht einer Entladestation.

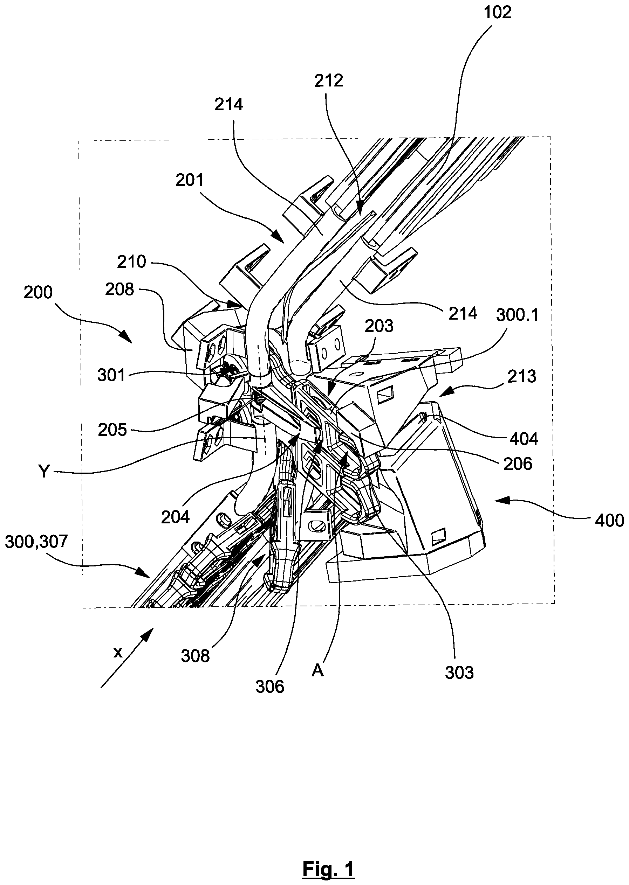

Figur 1 zeigt eine Ansicht einer schräg von unten dargestellten Übergabestation 200 eines Hängeförderers 100. Diese weist einen eingangsseitig angeschlossenen Zuförderer 101 auf, welcher zum Zuführen einer Mehrzahl von unbeladenen Mitnehmern 300 ausgebildet ist. An einer Ausgangsseite 212 der Übergabestation 200 ist ein Abförderer 102 angeordnet, über welchen in der Übergabestation 200 mit Kleiderbügeln 401 beladene Mitnehmer 300 aus der Übergabestation 200 abgefördert werden. Die Übergabestation 200 weist ein Mitnehmergleis 201 auf, welche sich zwischen der Eingangsseite 211 und der Ausgangsseite 212 erstreckt. Diese weist zwei parallel voneinander beabstandete Schienen 214 auf, auf welchen jeweils eine Rolle 301 eines Mitnehmers 300 geführt wird. Eingangsseitig werden in dem gezeigten Ausführungsbeispiel eine Mehrzahl Mitnehmer 300 in einer vertikalen Transportausrichtung 307 zugeführt, welche dann im Verlauf der Übergabestation 200 in eine schräge Beladeausrichtung 306 überführt werden, anschließend mit einem Kleiderbügel 401 beladen und daraufhin in die Transportausrichtung 307 zurücküberführt werden, bevor die Mitnehmer 300 an der Ausgangsseite 212 der Übergabestation mitsamt dem eingehängten Kleiderbügel 401 an den Abförderer übergeben werden. Das Mitnehmergleis 201 weist dazu eine entsprechende Geometrie auf. Zum einen ist es über den Verlauf der Übergabestation 200 abfallend ausgebildet, so dass die Übergabestation 200 befahrende Mitnehmer 300 diese komplett schwerkraftgetrieben durchfahren können. Zum anderen weist das Mitnehmergleis 201 einen ersten tordierten Abschnitt 209 auf, in welchem das Gleis 201 um einen Winkel verdreht wird, welcher der Überführung des Mitnehmers 300 von der Transportausrichtung 307 in die Beladeausrichtung 306 entspricht. Daran anschließend weist das Mitnehmergleis 201 einen Übergabeabschnitt 213 auf, in welchem die Gleisausrichtung im Wesentlichen der Beladeausrichtung 306 entspricht. Stromabwärts des Übergabeabschnitts 213 weist das Mitnehmergleis 201 einen dem ersten tordierten Abschnitt 209 entgegengesetzt tordierten Abschnitt 210 auf, in welchem die dann beladenen Mitnehmer 300 in die Transportausrichtung 307 rücküberführt werden. Wie zu erkennen ist, weist die der Übergabeschnittstelle S zugewandte Schiene 214 einen Höhenversatz auf, welcher ein abruptes Schwenken des Mitnehmers 300 von der Beladeausrichtung 306 in die Transportausrichtung 307 bewirkt.

Zum Überführen eines Mitnehmers 300 von der Transportausrichtung 307 in die Beladeausrichtung weist die Übergabestation 200 eine Fixierkontur 203 auf bzw. dient die Fixierkontur 203 Regulierelement, das dafür sorgt, dass nur beladene Mitnehmer 300 die Übergabestation 200 passieren können. Die Fixierkontur 203 weist im Wesentlichen zwei Sperrelemente auf. Diese umfassen eine Anlagekante 206, welches eine Weiterbewegung eines in die Fixierkontur 203 eingefahrenen Mitnehmers 300.1 in Transportrichtung X unterbindet. Diese Anlagekante 206 kommt mit einem unteren Abschnitt der Tragöse 303 des in der Fixierkontur 203 befindlichen Mitnehmers 300.1 in Anlage, insbesondere mit einer in Transportrichtung X weisenden Seitenfläche des Mitnehmers 300.1. Als weiteres Sperrelement weist die Fixierkontur 203 ein schwenkbewegliches und mittels einer Drehfeder 205 vorgespanntes Auflageelement 204 auf, welches das Verschwenken des Mitnehmers 300.1 um die Transportachse X herum unterbindet. Der Mitnehmer 300.1 kommt auf diesem mit einer im Wesentlichen nach unten weisenden Seitenfläche zum Liegen, das Auflageelement 204 stützt somit einen Teil der Gewichtskraft des Mitnehmers 300.1 ab. Das Auflageelement 204 sorgt dafür, dass der Mitnehmer 300.1 gegen die Anlagekante 206 fährt und nicht weiterbewegt werden kann. Das Abstützen dieses einen Mitnehmers 300.1 durch das Auflageelement 204 reicht damit aus, beliebig viele Mitnehmer 300 vor der Fixierkontur 203 zu stauen. Das schwenkbewegliche Auflageelement 204 ist zwischen einer Sperrposition 215 und einer Freigabeposition 216 verschwenkbar, wobei in der Sperrposition 215 der Mitnehmer 300.1 in der Fixierkontur 203 und damit gegen die Anlagekante 206 gehalten wird, und wobei der Mitnehmer 300.1 in der Freigabeposition 216 so weit verschwenkt wird, dass dieser die Anlagekante 206 seitlich passieren kann und damit entlang des Mitnehmergleises 201 weitertransportiert wird. Das Auflageelement 204 ist dabei schwenkbeweglich um eine Schwenkachse Y gelagert, welche mit der Schiene 214 fluchtet, welche dem Fallschacht 404 abgewandt ist. Dadurch kann auf baulich besonders einfache Weise das Auflageelement 204 am Mitnehmergleis 201 befestigt werden. In der Fixierposition des Mitnehmers 300.1 ist dessen Tragöse 303 unterhalb eines Fallschachts 404 angeordnet, durch welchen vereinzelt Kleiderbügel 401 zugeführt werden und in die Tragöse 303 eingefädelt werden können. Sobald der Haken 402 eines Kleiderbügels 401 in die Tragöse 303 eingefädelt ist, übersteigt die Summe der Gewichtskraft von Mitnehmer 300.1 und eingehängtem Kleiderbügel 401 die Federvorspannung, so dass das Auflageelement 204 von der Sperrposition 215 in die Freigabeposition 216 überführt wird. Der Mitnehmer 300 wird in die Transportausrichtung 307 zurückgeschwenkt und in Richtung des Abförderers 102 transportiert.

Bei einem in der Fixierkontur 203 befindlichen Mitnehmer 300.1 erstreckt sich dessen Beladeabschnitt 308 umfassend den sich durch das Gleis 201 erstreckenden Mitnehmerkörper sowie die sich daran anschließende Tragöse 303 in die Fixierkontur, während sich der Transportabschnitt 310 umfassend die Rollen 301 und den Mitnehmerstift 309 oberhalb der Schienen 214 bzw. des Gleises 201 befindet. Der Transportabschnitt 307 erstreckt sich dabei in ein seitliches Führungsprofil 208, welches den Kurvenverlauf zwischen Beladeausrichtung 306 und Transportausrichtung 307 für den Transportabschnitt 307 adaptiert und die Übergangsbewegung dadurch unterstützt.

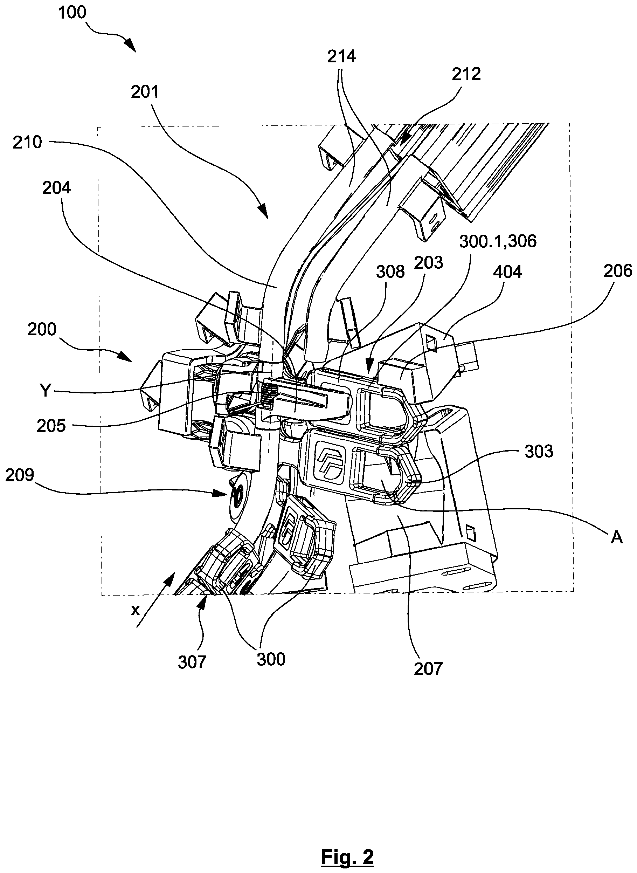

Figur 2 zeigt eine weitere Ansicht der Ausführungsform der Übergabestation 200 gemäß Figur 1. Die Förderrichtung X der Mitnehmer 300 verläuft in dabei wie gezeigt in Bildrichtung von unten nach oben. Eine Mehrzahl Mitnehmer 300 staut sich bis in den Zuförderer 101 hinein, wobei sich ein einzelner Mitnehmer 300.1 in der Fixierkontur 203 befindet und auf Beladung mit einem Kleiderbügel 201 wartet. Die vor der Fixierkontur 203 gestauten Mitnehmer 300 sind wie zu sehen sukzessive in die Beladeausrichtung 306 geschwenkt und werden vor Erreichen der Fixierkontur 203 an einer Führungswand 207 entlanggeführt. Es ist zu erkennen, dass dessen Tragöse 303 unterhalb des Fallschachts 404 angeordnet ist. Ferner zu erkennen sind der vor der Übergabeschnittstelle A angeordnete erste tordierte Abschnitt 209, in welchem die vom Zuförderer 101 kommenden Mitnehmer 300 von ihrer vertikalen Transportausrichtung 307 in die Beladeausrichtung 306 überführt werden, sowie der stromabwärts der Übergabeschnittstelle A angeordnete zweite tordierte Abschnitt 210, in welchem die Mitnehmer 300 von der vertikalen Beladeausrichtung 306 in die Transportausrichtung 307 rücküberführt werden. Gut zu erkennen ist die Schwenkachse Y des schwenkbeweglichen Auflageelements 204, welche mit der dieses tragenden Schiene 214 fluchtet.

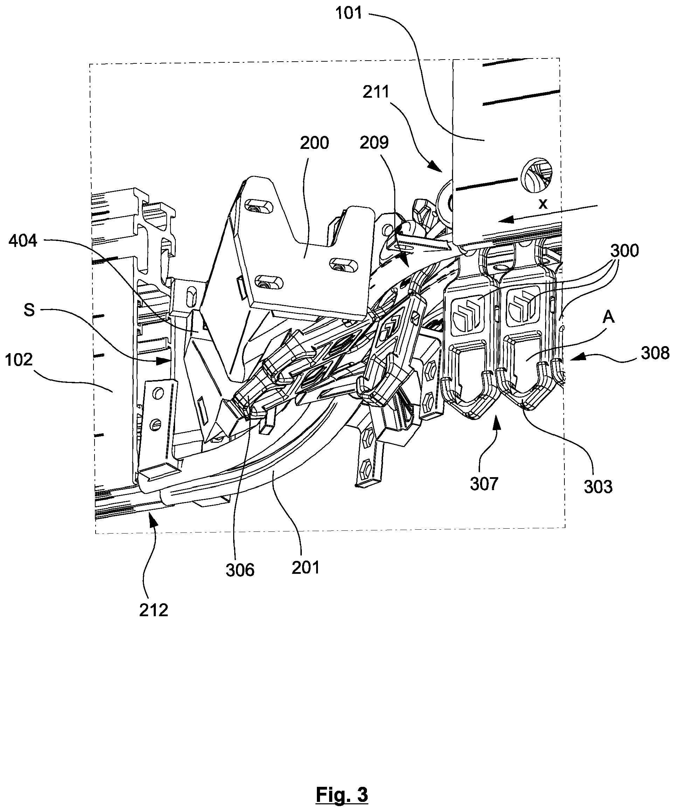

Figur 3 zeigt eine Seitenansicht derselben Ausführungsform, mit einer Mehrzahl in der Übergabestation 200 und der dieser vorgelagerten Zuförderstrecke 101 gestauten Mitnehmern 300, welche sukzessive mit jedem Beladevorgang eines in der Fixierkontur 203 wartenden Mitnehmers 300.1 weitergefördert werden, dann zunächst aus der Transportausrichtung 307 in die Beladeausrichtung 306 überführt, anschließend entlang der Führungswand 207 entlanggeführt und schließlich unterhalb des Fallschachts 404 positioniert werden, um schließlich im beladenen Zustand in die Transportausrichtung 307 zurückgeschwenkt und einem Abförderer 102 zugeführt zu werden.

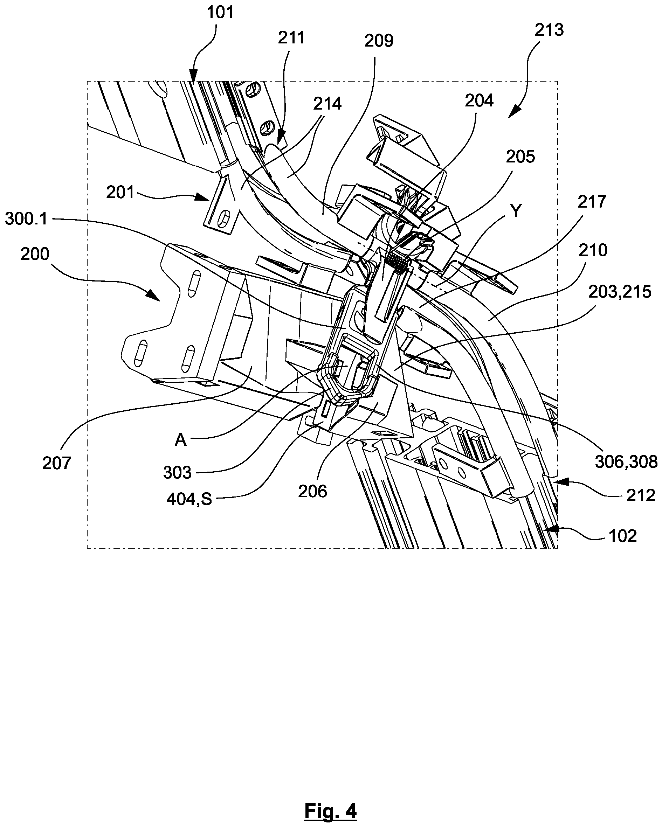

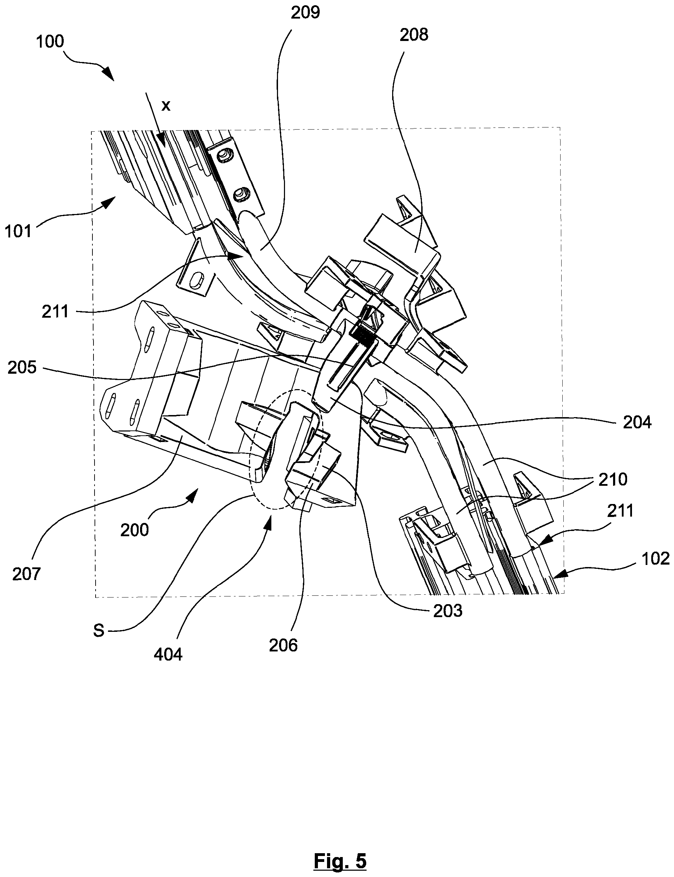

Figur 4 zeigt eine Ansicht eines einzelnen in einer Fixierkontur gehaltenen Mitnehmers 300.1. Dieser liegt mit seiner in Transportrichtung X weisenden Seitenfläche im Bereich der Tragöse 303 an der Anlagekante 206 an und wird im Bereich des oberhalb der Tragöse 303 befindlichen Mitnehmerkörpers durch das in Sperrposition 215 befindliche Auflageelement 204 in vertikaler Richtung abgestützt bzw. gegen die Führungswand 207 gedrückt. Das um die Schwenkachse Y schwenkbare Auflageelement 204 ist mittels einer Drehfeder 205 vorgespannt. Es ist zu erkennen, dass der Öffnungsquerschnitt A der Tragöse 303 im Bereich der Übergabeschnittstelle S genau unterhalb des Fallschachts 404 angeordnet und zum Aufnehmen eines Bügelhakens 402 positioniert ist. Stromabwärts ist eine Mehrzahl bereits mit Kleiderbügeln 401 beladene Mitnehmer 300 auf einem der Übergabestation 200 nachfolgenden Abförderer 102 zu erkennen. Fig. 5 zeigt eine ähnliche Ansicht insbesondere mit hervorgehobener Übergabeschnittstelle S, in einem Zustand ohne darin wartenden Mitnehmer 300.

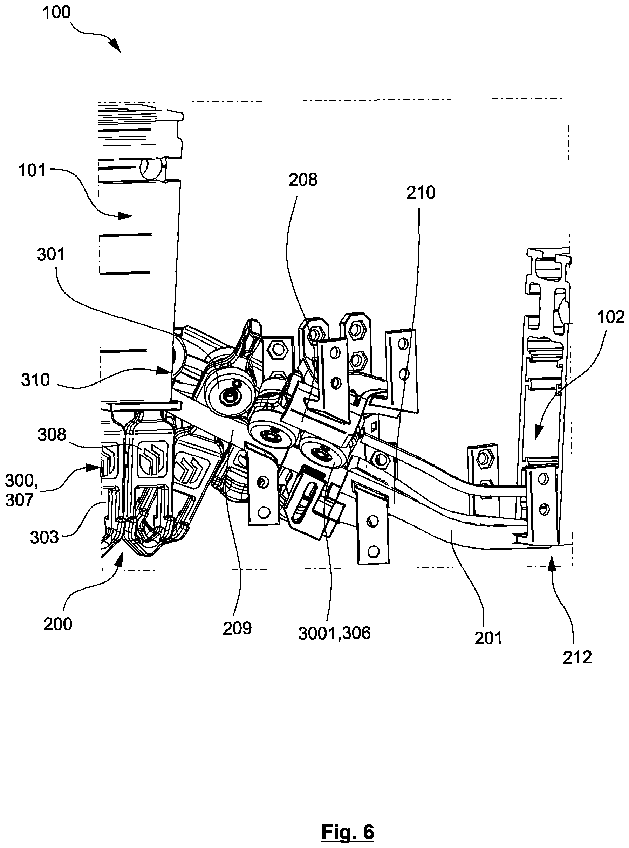

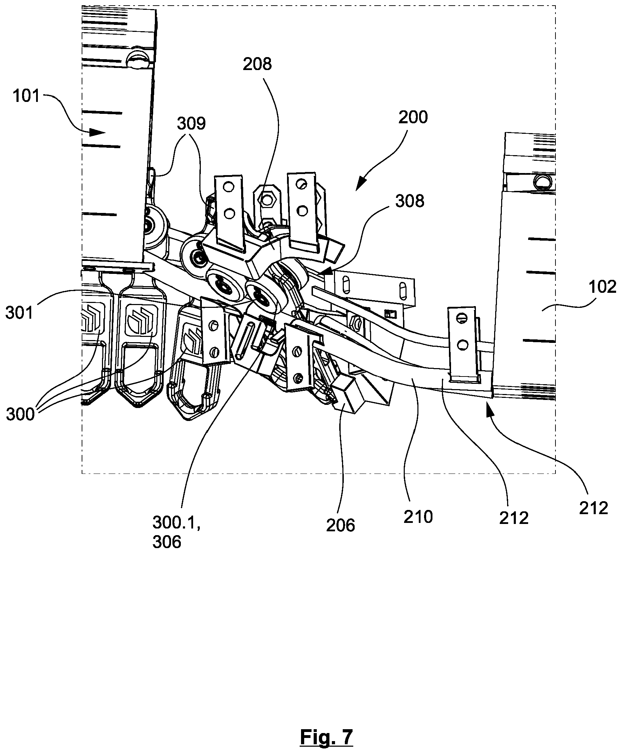

Die Figuren 6 und 7 zeigen Seitenansichten einer Mehrzahl in der Übergabestation 200 gestauter Mitnehmer 300, wobei die Ansichten der Ansicht von Figur 3 gegenüberliegen. Besonders zu erkennen ist, dass das Mitnehmergleis 201 im Bereich der Übergabestation 200 ein starkes Gefälle aufweist. Ferner zu erkennen ist das sukzessive Verschwenken der Transportabschnitte 310 bzw. insbesondere der Rollen 301 der Mitnehmer 300 im Zuge des Annäherns an die Fixierkontur 203. Außerdem ist das im Transportabschnitt 310, insbesondere im Bereich des Mitnehmerstifts 309 angeordnete Führungsprofil 208, das den Schwenkverlauf der Mitnehmer 300 im Zuge des Verschwenkens aus der Beladeausrichtung 306 in die Transportausrichtung 307 seitlich führt.

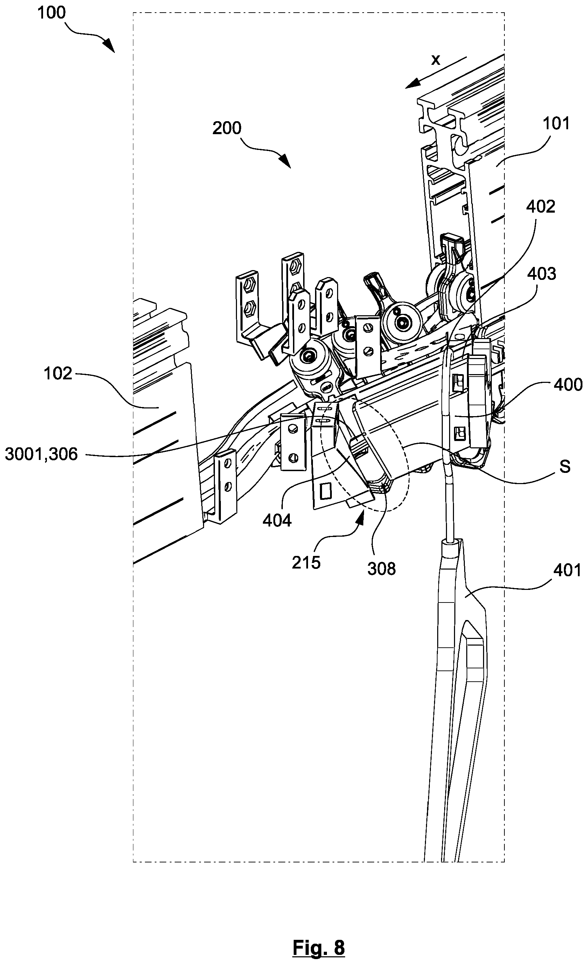

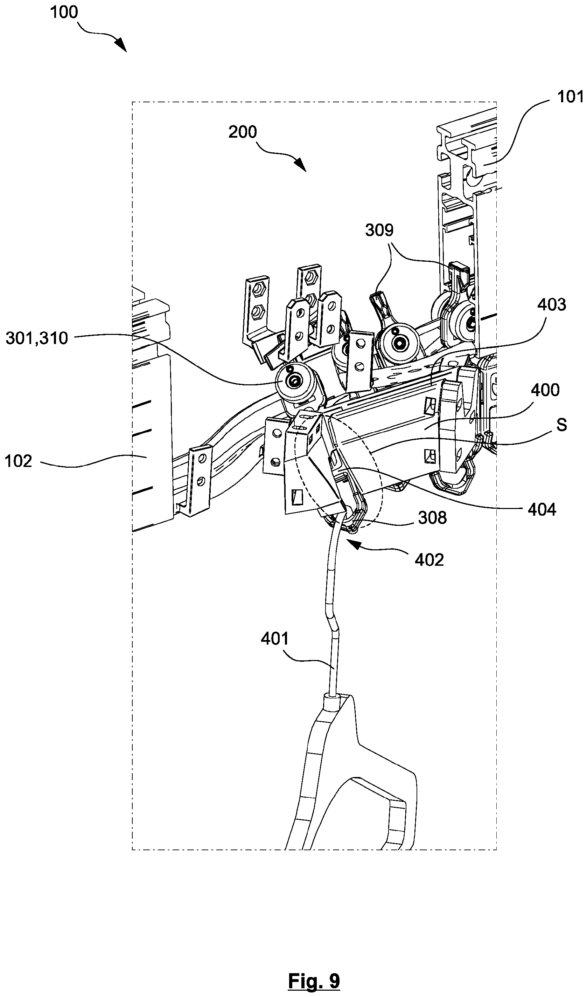

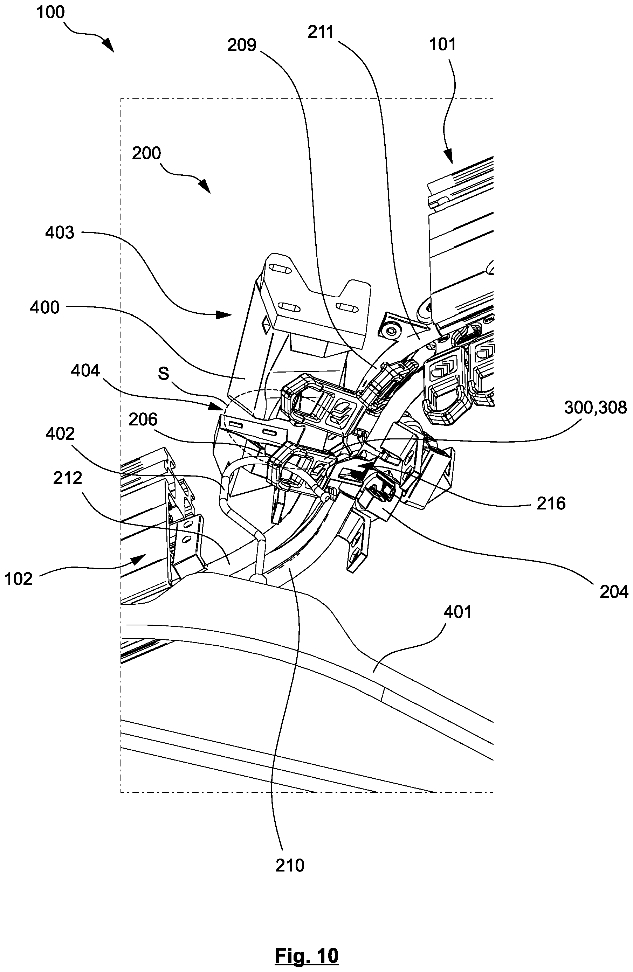

Die Figuren 8 und 9 zeigen Seitenansichten des Verlaufs eines über einen Kleiderbügelzubringer 400 und auf einen in einer Fixierkontur 203 fixierten Mitnehmer 300.1 zubewegten Kleiderbügels 401. Der Kleiderbügelzubringer 400 weist eine auf die Übergabeschnittstelle S zulaufende Gefällestrecke 403 auf, welche in dem oberhalb des Öffnungsquerschnitts A der Tragöse 303 des wartenden Mitnehmers 300.1 angeordneten Fallschacht 404 endet. Der Fallschacht 404 weist zwei seitliche Begrenzungswände auf, welche sich in Richtung der Tragöse 303 verjüngen. Dem Kleiderbügelzubringer 400 werden Kleiderbügel vereinzelt in einer vorbestimmbaren Taktung zugeführt, beispielsweise einer Taktung, welcher einer maximalen Taktung entspricht, mit der beladene Mitnehmer 300 aus der Fixierkontur 203 abgeführt werden können. In Figur 8 befindet sich ein Kleiderbügel 401 auf der Gefällestrecke 403, wobei der Kleiderbügel 401 mit seinem Bügelhaken 402 an der Gefällestrecke 403 aufgehängt ist. Figur 9 zeigt den Moment, in dem der Kleiderbügelhaken 402 des zugeführten Kleiderbügels 401 in den Öffnungsquerschnitt A der an der Übergabeschnittstelle S positionierten Tragöse 303 eingefädelt wird. Aufgrund der summierten Gewichtskraft aus Mitnehmer 300.1 und Kleiderbügel 401 wird der Mitnehmer 300.1 aus seiner Beladeausrichtung 306 in die Transportausrichtung 307 verschwenkt, bzw. wird das Auflageelement 204 von seiner Sperrposition 215 in seine Freigabeposition 216 überführt, so dass der Mitnehmer 300.1 die Anlagekante 206 seitlich passieren kann. Fig. 10 zeigt eine der in Figur 9 gezeigten Seitenansicht, welche den Moment der Einfädelns zeigt, entsprechende Ansicht von unten, welche insbesondere das Verschwenken des Auflageelements 204 zeigt.

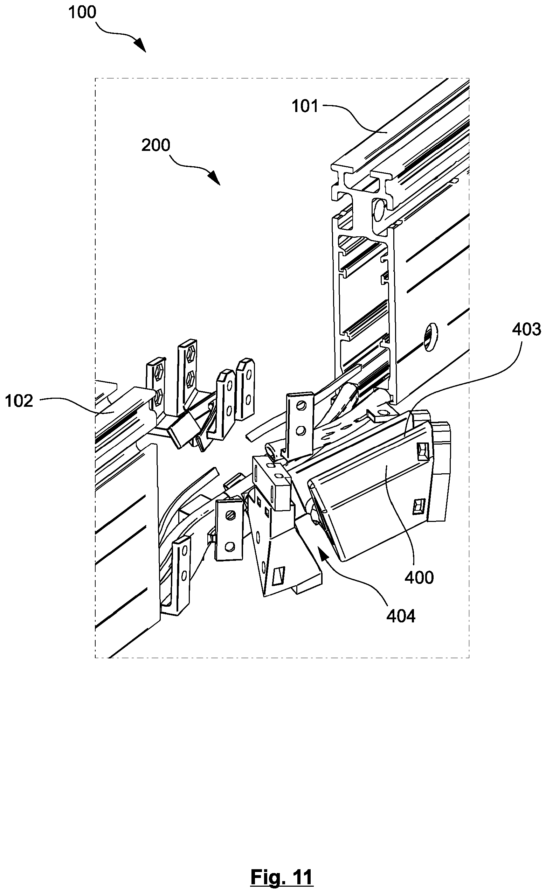

Figur 11 zeigt eine Ansicht entgegen der Transportrichtung X einer in einen Hängeförderer 100 integrierte Übergabestation, mit einer an der Eingangsseite 211 der Übergabestation 200 angeordnete Zuförderstrecke 101 zum Zufördern von leeren Mitnehmern 300. Der Hängeförderer 100 weist ferner eine an die Ausgangsseite 212 der Übergabestation 200 angeschlossene Abförderstrecke 102 zum Abfördern von mit Kleiderbügeln 401 beladenen Mitnehmern 300 auf.

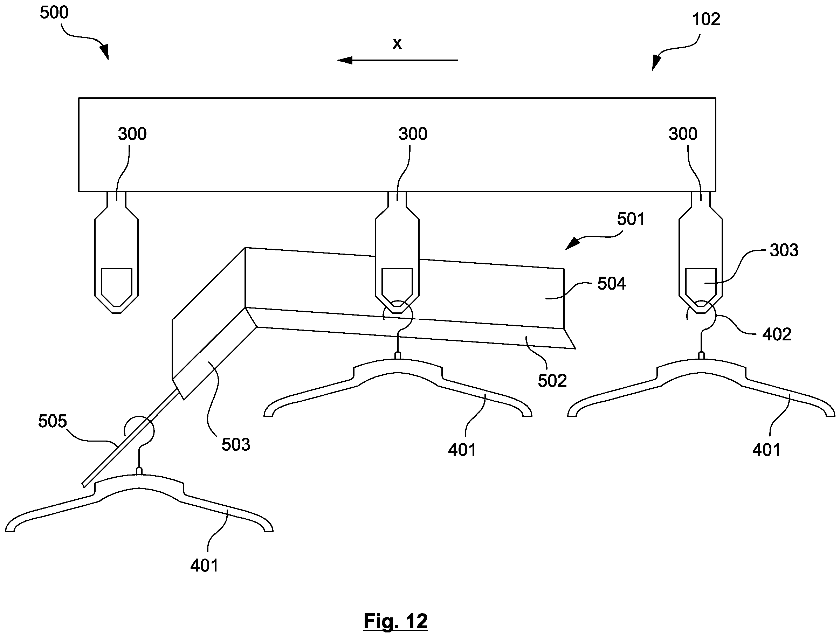

Fig. 12 zeigt beispielhaft eine Entladestation 500 zum Trennen der Kleiderbügel 401 von den Mitnehmern 300. Diese ist unterhalb der Abförderstrecke 102 angeordnet und im Wesentlichen in Transportrichtung X ausgerichtet. Die Entladestation 500 weist eine Entladekontur 501 auf, welche im Wesentlichen aus einer Einlaufsteigung 502, einem sich in Transportrichtung X daran anschließenden Auslaufgefälle 503 sowie einer im Wesentlichen vertikal angeordneten und an die Einlaufsteigung 502 und an das Auslaufgefälle 503 angrenzenden Führungskulisse 504 besteht. Die in der Abförderstrecke 102 geführten und mit Kleiderbügeln 401 beladenen Mitnehmer 300 werden in Transportrichtung X in Richtung der Entladestation 500 bewegt. Im Zuge des Hindurchführens durch diese laufen die Spitzen der Kleiderbügelhaken 402 auf die Einlaufsteigung 502 auf und werden durch die Einlaufsteigung 502 vertikal und durch die Führungskulisse 504 horizontal aus der Tragöse 303 der Mitnehmer 300 herausgedrückt. Denn die Führungskulisse 504 ist leicht schräg zur Transportrichtung X sich von der Abförderstrecke 102 wegbewegend ausgerichtet. An die Einlaufsteigung 502 schließt sich das abfallende Auslaufgefälle 503 an, über welches die Kleiderbügelhaken 402 weiterhin horizontal mittels der Führungskulisse 504 aus den Tragösen 303 gedrückt werden, gleichzeitig ermöglicht das Gefälle einen Abtransport der Kleiderbügel 401 aus der Entladestation 500 heraus, ohne dass diese mittels eines zusätzlichen Antriebs fortbewegt werden müssten. Die mittels der Entladestation 500 entfädelten Kleiderbügel 401 werden schließlich über eine ein Gefälle aufweisende Führungsschiene 505 abgeführt.

### Bezugszeichenliste:

- 100: Hängeförderer
- 101: Zuförderstrecke
- 102: Abförderstrecke
- 200: Übergabestation
- 201: Mitnehmergleis
- 203: Fixierkontur
- 204: Elastisches Auflageelement
- 205: Spannfeder
- 206: Anlagekante
- 207: Führungswand
- 208: Führungsprofil
- 209: erster tordierter Abschnitt
- 210: zweiter tordierter Abschnitt
- 211: Eingangsseite
- 212: Ausgangsseite
- 213: Übergabeabschnitt
- 214: einzelne Schiene des Mitnehmergleis
- 215: Sperrposition
- 216: Freigabeposition
- 217: Versatz
- 300: Mitnehmer
- 300.1: fixierter Mitnehmer
- 301: Rollen
- 303: Tragöse
- 306: Beladeausrichtung
- 307: Transportausrichtung
- 308: Beladeabschnitt
- 309: Mitnehmerstift
- 310: Transportabschnitt
- 400: Kleiderbügelzubringer
- 401: Kleiderbügel
- 402: Kleiderbügelhaken
- 403: Gefällestrecke
- 404: Fallschacht
- 500: Entladestation
- 501: Entladekontur
- 502: Einlaufsteigung
- 503: Auslaufgefälle
- 504: Führungskulisse
- 505: Führungsschiene
- A: Öffnungsquerschnitt
- S: Übergabeschnittstelle
- X: Transportrichtung, Transportachse
- Y: Schwenkachse des Auflageelements

## Patentansprüche

1. Verfahren zum vereinzelten Beladen von Mitnehmern (300) eines Hängeförderers (100) mit Ladungsträgern (401) zum Transportieren von Hängeware, aufweisend die Schritte:
• Transportieren einer Mehrzahl von Mitnehmern (300) auf einem Mitnehmergleis (214) entlang einer Transportrichtung (X) durch eine Übergabestation (200), wobei die Mitnehmer (300) in der Übergabestation (200) zumindest abschnittsweise eine Beladeausrichtung (306) aufweisen,
• Fixieren eines in der Beladeausrichtung (306) befindlichen Mitnehmers (300) an einer Übergabeschnittstelle (S);
• Vereinzeltes Heranführen einer Mehrzahl von Ladungsträgern (401) mittels eines Ladungsträgerzubringers (400) an die Übergabeschnittstelle (S), wobei an der Übergabeschnittstelle (S) je ein freies Ende eines Ladungsträgerhakens (402) in eine Tragöse (303) eines an der Übergabeschnittstelle (S) fixierten Mitnehmers (300) eingefädelt wird;
• **dadurch gekennzeichnet, dass** das Verfahren ferner das Überführen des beladenen Mitnehmers (300) in eine Transportausrichtung (307) umfasst, wobei der Mitnehmer (300) infolge des Beladens mit dem Ladungsträger (401) die Übergabeschnittstelle (S) passiert, wobei das Überwinden der Übergabeschnittstelle (S) zunächst zumindest abschnittsweise das Überführen des beladenen Mitnehmers (300) von der Beladeausrichtung (306) in die Transportausrichtung (307) umfasst und dadurch bedingt anschließend den Weitertransport des Mitnehmers (300) entlang des Mitnehmergleises (201) umfasst.

2. Verfahren nach Anspruch 1, wobei der Mitnehmer (300) an der Übergabeschnittstelle (S) in Transportrichtung (X) und senkrecht zur Transportrichtung (X) fixiert wird, wobei durch die durch das Beladen mit einem Ladungsträger (401) auf die Tragöse (308) wirkende kinetische Energie eine Vorspannkraft eines Sperrelements (204) einer Fixierkontur überwunden wird, so dass der Mitnehmer (300) senkrecht zur Transportachse (X) verschwenkt und anschließend in Transportrichtung (X) weiterbewegt wird.

3. Verfahren nach Anspruch 1 oder 2, wobei der Mitnehmer (300) an der Übergabeschnittstelle (S) in Transportrichtung (X) und senkrecht zur Transportrichtung (X) fixiert wird, wobei nach mittels einer Sensorik festgestellter Beladung des Mitnehmers (300) ein Sperrelement (204) einer Fixierkontur (203) mittels eines Aktors in eine Freigabeposition (216) überführt wird, so dass der Mitnehmer (300) senkrecht zur Transportachse (X) verschwenkt und anschließend in Transportrichtung (X) weiterbewegt wird.

4. Verfahren nach einem der Ansprüche 1 bis 3, wobei die Mitnehmer (300) beim Durchfahren der Übergabestation (200) zunächst die Transportausrichtung (307) aufweisen und anschließend im Zuge eines Weitertransports entlang des Mitnehmergleises (201) in die Beladeausrichtung (306) überführt werden.

5. Verfahren nach einem der vorangehenden Ansprüche, wobei der Mitnehmer (300) beim Überführen von der Transportausrichtung (307) in die Beladeausrichtung (306) oder umgekehrt im Wesentlichen um die Transportachse (X) der Mitnehmer (300) verschwenkt wird.

6. Übergabestation (200), insbesondere zur Ausführung eines Verfahrens nach einem der vorangehenden Ansprüche, zum vereinzelten Beladen von Mitnehmern (300) eines Hängeförderers (100) mit Ladungsträgern (401) zum Transportieren von Hängeware,
• mit einem Mitnehmergleis (201) zum Transportieren der Mitnehmer (300) in einer Transportrichtung (X),
• **dadurch gekennzeichnet, dass** die Übergabestation ferner eine Übergabeschnittstelle (S) aufweist, in welcher das Mitnehmergleis (201) zum Halten eines Mitnehmers (300) in einer Beladeausrichtung (306) quer zur Transportrichtung (X) geneigt ist, und
• eine an der Übergabeschnittstelle (S) angeordnete Fixierkontur (203) aufweist, welche zwischen einer Sperrposition (215), in welcher ein Mitnehmer (300) an der Fixierkontur (203) gehalten ist, und einer Freigabeposition (216), in welcher ein Mitnehmer (300) die Fixierkontur passieren kann, verstellbar ist,
• wobei die Fixierkontur (203) durch das Beladen eines Mitnehmers (300) mit einem Ladungsträger (401) oder nach mittels einer Sensorik festgestellter Beladung des Mitnehmers (300) durch einen Aktor von der Sperrposition (215) in die Freigabeposition (216) überführbar ist.

7. Übergabestation (200) nach Anspruch 6, wobei die Fixierkontur (203) ein erstes Sperrelement (204) aufweist, das zwischen der Sperrposition (215), in welcher ein Mitnehmer (300) senkrecht zur Transportrichtung (X) blockiert ist, und einer Freigabeposition (216), in welcher der Mitnehmer (300) senkrecht zur Transportrichtung (X) bewegbar ist, auslenkbar ist.

8. Übergabestation (200) nach Anspruch 7, wobei das erste Sperrelement (204) durch die im Zuge des Beladevorgangs auf den Beladeabschnitt (308) des Mitnehmers (300) wirkende kinetische Energie des Ladungsträgers (401) derart ausgelenkt ist, dass es von der Sperrposition (215) in die Freigabeposition (216) überführt wird.

9. Übergabestation (200) nach Anspruch 7 oder 8, wobei die Fixierkontur (203) ferner ein zweites Sperrelement (206) zum Sperren des Mitnehmers (300) in Transportrichtung (X) aufweist, wobei der Mitnehmer (300) in der Sperrposition (215) gegen das das zweite Sperrelement (206) gehalten ist.

10. Übergabestation (200) nach einem der Ansprüche 7 bis 9, wobei das erste Sperrelement (204) zwischen der Sperrposition (215) und der Freigabeposition (216) schwenkbeweglich verstellbar und, beispielsweise mittels einer Feder (205), vorgespannt ist.

11. Übergabestation (200) nach einem der Ansprüche 6 bis 10, wobei die Sensorik im Bereich der Übergabeschnittstelle (S) auf einen Transportabschnitt (310) des Mitnehmers (300) gerichtet ist und dazu eingerichtet ist, das Überführen eines Mitnehmers (300) von der Beladeausrichtung (306) in die Transportausrichtung (307) zu erfassen.

12. Übergabestation (200) nach einem der Ansprüche 6 bis 11, wobei das Mitnehmergleis (201) stromabwärts der Übergabeschnittstelle (A) einen Abschnitt (210) aufweist, in welchem der Mitnehmer (300) aus der Beladeausrichtung (306) in eine Transportausrichtung (307), in welcher der Mitnehmer (300) eine im Wesentlichen vertikale Position aufweist, geschwenkt wird.

13. Übergabestation (200) nach einem der Ansprüche 6 bis 12, wobei das Mitnehmergleis (201) zwei voneinander beabstandete Schienen (214) zum Tragen je einer Rolle (301) eines Mitnehmers (300) aufweist, wobei die Schwenkachse (Y) des ersten Sperrelements (204) mit einer der Schienen (214) des Mitnehmergleises (201) fluchtet, wobei die der Schwenkachse (Y) gegenüberliegende Schiene (214) stromabwärts der Übergabeschnittstelle (S) einen Versatz (217) oder ein Gefälle aufweist, welches eine zum zumindest ansatzweisen Überführen des Mitnehmers (300) von der Beladeausrichtung (306) in die Transportrichtung (307) entsprechende vertikale Distanz aufweist.

14. Übergabestation (200) nach einem der Ansprüche 6 bis 13, wobei das zweite Sperrelement (206) eine Anlagekante (206) aufweist, an welcher eine in Transportrichtung (X) weisende Seite des Beladeabschnitts (308) des Mitnehmers (300) zur Anlage kommt, und wobei das erste Sperrelement (204) eine Anlagefläche aufweist, auf welcher eine im Wesentlichen vertikal nach unten weisende Seite des Beladeabschnitts (308) zur Anlage kommt.

15. Übergabestation (200) nach einem der Ansprüche 6 bis 14, wobei sich der Transportabschnitt des an der Fixierkontur befindlichen Mitnehmers (300.1) ferner in ein Führungsprofil (208) hineinerstreckt, das den Transportabschnitt (310) bei der Überführung des Mitnehmers (300) von der Belade- in die Transportausrichtung (306, 307) seitlich führt.

16. Übergabestation (200) nach einem der Ansprüche 9 bis 15, wobei das zweite Sperrelement (206) zum Stauen einer Mehrzahl sich stromaufwärts der Fixierkontur (203) befindender Mitnehmer (300) ausgebildet ist.

17. Übergabestation (200) nach einem der Ansprüche 9 bis 16, wobei das erste Sperrelement (204) derart konfiguriert ist, dass ein in der Sperrposition (215) an der Fixierkontur (203) befindlicher unbeladener Mitnehmer (300) gegen die Anlagekante (206) des zweiten Sperrelements (206) gehalten ist.

18. Hängeförderer (100) mit einer Übergabestation (200) nach einem der vorangehenden Ansprüche 6 bis 17, aufweisend eine an einer Eingangsseite (211) der Übergabestation (200) angeordnete Zuförderstrecke (101) zum Zufördern von leeren Mitnehmern (300), ferner aufweisend eine an eine Ausgangsseite (212) der Übergabestation (200) angeschlossene Abförderstrecke (102) zum Abfördern von mit Ladungsträgern (401) beladenen Mitnehmern (300), sowie mit einem an den Ladungsträgerzubringer (400) angeschlossenen Ladungsträgerförderer.

## Claims

1. Method for the singulated loading of carriers (300) of an overhead conveyor (100) with load carriers (401) for transporting suspended goods, comprising the steps of:
• transporting a plurality of carriers (300) on a carrier track (214) along a transport direction (X) through a transfer station (200), wherein the carriers (300) in the transfer station (200) have a loading orientation (306) at least in sections,
• fixing a carrier (300) located in the loading orientation (306) at a transfer interface (S);
• singulated feeding of a plurality of load carriers (401) by means of a load carrier feeder (400) to the transfer interface (S), wherein at the transfer interface (S) in each case a free end of a load carrier hook (402) is threaded into a carrying eye (303) of a carrier (300) fixed at the transfer interface (S);
• **characterised in that** the method further comprises the transfer of the loaded carrier (300) into a transport orientation (307), wherein the carrier (300) passes the transfer interface (S) as a result of the loading with the load carrier (401), wherein the overcoming of the transfer interface (S) initially comprises the transfer of the loaded carrier (300) from the loading orientation (306) into the transport orientation (307) at least in sections and as a result subsequently comprises the further transport of the carrier (300) along the carrier track (201).

2. Method according to claim 1, wherein the carrier (300) is fixed at the transfer interface (S) in the transport direction (X) and perpendicular to the transport direction (X), wherein a pretensioning force of a blocking element (204) of a fixing contour is overcome by the kinetic energy acting on the carrying eye (308) as a result of the loading with a load carrier (401), so that the carrier (300) is pivoted perpendicular to the transport axis (X) and subsequently moved further in the transport direction (X).

3. Method according to claim 1 or 2, wherein the carrier (300) is fixed at the transfer interface (S) in the transport direction (X) and perpendicular to the transport direction (X), wherein after loading of the carrier (300) detected by means of a sensor system a blocking element (204) of a fixing contour (203) is transferred into a release position (216) by means of an actuator, so that the carrier (300) is pivoted perpendicular to the transport axis (X) and subsequently moved further in the transport direction (X).

4. Method according to one of claims 1 to 3, wherein the carriers (300) initially have the transport orientation (307) when passing through the transfer station (200) and are subsequently transferred into the loading orientation (306) in the course of further transport along the carrier track (201).

5. Method according to one of the preceding claims, wherein the carrier (300) is pivoted substantially about the transport axis (X) of the carriers (300) when transferring from the transport orientation (307) into the loading orientation (306) or vice versa.

6. Transfer station (200), in particular for carrying out a method according to one of the preceding claims, for the singulated loading of carriers (300) of an overhead conveyor (100) with load carriers (401) for transporting suspended goods,
• with a carrier track (201) for transporting the carriers (300) in a transport direction (X),
• **characterised in that** the transfer station further has a transfer interface (S), in which the carrier track (201) is inclined transversely to the transport direction (X) for holding a carrier (300) in a loading orientation (306), and
• a fixing contour (203) arranged at the transfer interface (S), which can be adjusted between a blocking position (215), in which a carrier (300) is held at the fixing contour (203), and a release position (216), in which a carrier (300) can pass the fixing contour,
• wherein the fixing contour (203) can be transferred from the blocking position (215) into the release position (216) by the loading of a carrier (300) with a load carrier (401) or after loading of the carrier (300) detected by means of a sensor system by an actuator.

7. Transfer station (200) according to claim 6, wherein the fixing contour (203) has a first blocking element (204), which can be deflected between the blocking position (215), in which a carrier (300) is blocked perpendicular to the transport direction (X), and a release position (216), in which the carrier (300) can be moved perpendicular to the transport direction (X).

8. Transfer station (200) according to claim 7, wherein the first blocking element (204) is deflected by the kinetic energy of the load carrier (401) acting on the loading section (308) of the carrier (300) in the course of the loading process in such a way that it is transferred from the blocking position (215) into the release position (216).

9. Transfer station (200) according to claim 7 or 8, wherein the fixing contour (203) further has a second blocking element (206) for blocking the carrier (300) in the transport direction (X), wherein the carrier (300) is held in the blocking position (215) against the second blocking element (206).

10. Transfer station (200) according to one of claims 7 to 9, wherein the first blocking element (204) can be adjusted in a pivotably movable manner between the blocking position (215) and the release position (216) and is pretensioned, for example by means of a spring (205).

11. Transfer station (200) according to one of claims 6 to 10, wherein the sensor system in the region of the transfer interface (S) is directed at a transport section (310) of the carrier (300) and is configured to detect the transfer of a carrier (300) from the loading orientation (306) into the transport orientation (307).

12. Transfer station (200) according to one of claims 6 to 11, wherein the carrier track (201) downstream of the transfer interface (A) has a section (210), in which the carrier (300) is pivoted out of the loading orientation (306) into a transport orientation (307), in which the carrier (300) has a substantially vertical position.

13. Transfer station (200) according to one of claims 6 to 12, wherein the carrier track (201) has two rails (214) spaced apart from one another for carrying a respective roller (301) of a carrier (300), wherein the pivot axis (Y) of the first blocking element (204) is aligned with one of the rails (214) of the carrier track (201), wherein the rail (214) opposite the pivot axis (Y) downstream of the transfer interface (S) has an offset (217) or a slope, which has a vertical distance corresponding to the at least partial transfer of the carrier (300) from the loading orientation (306) into the transport direction (307).

14. Transfer station (200) according to one of claims 6 to 13, wherein the second blocking element (206) has a contact edge (206), against which a side of the loading section (308) of the carrier (300) pointing in the transport direction (X) comes into contact, and wherein the first blocking element (204) has a contact surface, against which a side of the loading section (308) pointing substantially vertically downwards comes into contact.

15. Transfer station (200) according to one of claims 6 to 14, wherein the transport section of the carrier (300.1) located at the fixing contour further extends into a guide profile (208), which laterally guides the transport section (310) during the transfer of the carrier (300) from the loading orientation into the transport orientation (306, 307).

16. Transfer station (200) according to one of claims 9 to 15, wherein the second blocking element (206) is designed for accumulating a plurality of carriers (300) located upstream of the fixing contour (203).

17. Transfer station (200) according to one of claims 9 to 16, wherein the first blocking element (204) is configured in such a way that an unloaded carrier (300) located in the blocking position (215) at the fixing contour (203) is held against the contact edge (206) of the second blocking element (206).

18. Overhead conveyor (100) with a transfer station (200) according to one of the preceding claims 6 to 17, having a feed section (101) arranged at an input side (211) of the transfer station (200) for feeding empty carriers (300), further having a removal section (102) cone cted to an output side (212) of the transfer station (200) for removing carriers (300) loaded with load carriers (401), and with a load carrier conveyor connected to the load carrier feeder (400).

## Revendications

1. Procédé de chargement individuel de taquets (300) d'un convoyeur suspendu (100) avec des supports de chargements (401) pour le transport de marchandises suspendues, comprenant les étapes suivantes :
• transport d'une pluralité de taquets (300) sur une piste à taquets (214) le long d'une direction de transport (X) à travers une station de transfert (200), dans lequel les taquets (300) présentent, dans la station de transfert (200), au moins à certains endroits, une orientation de chargement (306),
• fixation d'un taquet (300) se trouvant dans l'orientation de chargement (306) au niveau d'une interface de transfert (S) ;
• rapprochement individuel d'une pluralité de supports de chargements (401), au moyen d'un chargeur de supports de charges (400), de l'interface de transfert (S), dans lequel, au niveau de l'interface de transfert (S), une extrémité libre d'un crochet de support de charge (402) est enfilée dans un œillet de support (303) d'un taquet (300) fixé à l'interface de transfert (S) ;
• **caractérisé en ce que** le procédé comprend en outre le passage du taquet (300) chargé dans une orientation de transport (307), dans lequel le taquet (300) traverse, à la suite du chargement avec le support de charge (401), l'interface de transfert (S), dans lequel le franchissement de l'interface de transfert (S) comprend d'abord, au moins à certains endroits, le passage du taquet (300) chargé de l'orientation de chargement (306) à l'orientation de transport (307) et comprend par conséquent ensuite le transport ultérieur du taquet (300) le long de la piste à taquets (201).

2. Procédé selon la revendication 1, dans lequel le taquet (300) est fixé, au niveau de l'interface de transfert (S), dans la direction de transport (X) et perpendiculairement à la direction de transport (X), dans lequel l'énergie cinétique générée par le chargement avec un support de charge (401), qui agit sur l'œillet de support (308), permet de surmonter une force de précontrainte d'un élément de blocage (204) d'un contour de fixation, de sorte que le taquet (300) est pivoté perpendiculairement à l'axe de transport (X) puis déplacé dans la direction de transport (X).

3. Procédé selon la revendication 1 ou 2, dans lequel le taquet (300) est fixé, au niveau de l'interface de transfert (S), dans la direction de transport (X) et perpendiculairement à la direction de transport (X), dans lequel, selon un chargement du taquet (300), détecté au moyen de capteurs, un élément de blocage (204) d'un contour de fixation (203) est amené, au moyen d'un actionneur, dans une position de libération (216), de sorte que le taquet (300) est pivoté perpendiculairement à l'axe de transport (X) puis déplacé dans la direction de transport (X).

4. Procédé selon l'une des revendications 1 à 3, dans lequel les taquets (300) présentent, lors de la traversée de la station de transfert (200), d'abord l'orientation de transport (307) puis, au cours d'un transport le long de la piste à taquets (201), sont amenés dans l'orientation de chargement (306).

5. Procédé selon l'une des revendications précédentes, dans lequel le taquet (300), lors du passage de l'orientation de transport (307) à l'orientation de chargement (306) ou inversement, est pivoté globalement autour de l'axe de transport (X) des taquets (300).

6. Station de transfert (200), plus particulièrement pour l'exécution d'un procédé selon l'une des revendications précédentes, pour le chargement individuel de taquets (300) d'un convoyeur suspendu (100) avec des supports de charges (401) pour le transport de marchandises suspendues,
• avec une piste à taquets (201) pour le transport des taquets (300) dans une direction de transport (X),
• **caractérisé en ce que** la station de transfert comprend en outre une interface de transfert (S) dans laquelle la piste à taquets (201) est incliné pour le maintien d'un taquet (300) dans une orientation de chargement (306) transversale par rapport à la direction de transport (X) et
• comprend un contour de fixation (203) disposé au niveau de l'interface de transfert (S), qui peut être déplacé entre une position de blocage (215), dans laquelle un taquet (300) est maintenu sur le contour de fixation (203), et une position libre (216), dans laquelle un taquet (300) peut traverser le contour de fixation,
• dans lequel le contour de fixation (203) peut être amené, par le chargement d'un taquet (300) avec un support de charge (401) ou après un chargement, détecté au moyen de capteurs, du taquet (300), à l'aide d'un actionneur, de la position de blocage (215) vers la position libre (216).

7. Station de transfert (200) selon la revendication 6, dans laquelle le contour de fixation (203) comprend un premier élément de blocage (204) qui peut être orienté entre la position de blocage (215), dans laquelle un taquet (300) est bloqué perpendiculairement à la direction de transport (X), et une position libre (216), dans laquelle le taquet (300) est mobile perpendiculairement à la direction de transport (X).

8. Station de transfert (200) selon la revendication 7, dans laquelle le premier élément de blocage (204) est dévié, à l'aide de l'énergie cinétique du support de charge (401) agissant, au cours du processus de chargement, sur la portion de chargement (308) du taquet (300), de sorte qu'il est amené de la position de blocage (215) à la position libre (216).

9. Station de transfert (200) selon la revendication 7 ou 8, dans laquelle le contour de fixation (203) comprend en outre un deuxième élément de blocage (206) pour le blocage du taquet (300) dans la direction de transport (X), dans lequel le taquet (300) est maintenu dans la position de blocage (215) contre le deuxième élément de blocage (206).

10. Station de transfert (200) selon l'une des revendications 7 à 9, dans laquelle le premier élément de blocage (204) peut être déplacé par pivotement entre la position de blocage (215) et la position libre (216) et est précontraint, par exemple au moyen d'un ressort (205).

11. Station de transfert (200) selon l'une des revendications 6 à 10, dans laquelle les capteurs sont orientés, au niveau de l'interface de transfert (S), vers une portion de transport (310) du taquet (300) et sont conçus pour détecter le passage d'un taquet (300) de l'orientation de chargement (306) à l'orientation de transport (307).

12. Station de transfert (200) selon l'une des revendications 6 à 11, dans laquelle la piste à taquets (201) comprend, en aval de l'interface de transfert (A), une portion (210) dans laquelle le taquet (300) est pivoté de l'orientation de chargement (306) vers une orientation de transport (307), dans laquelle le taquet (300) présente une position globalement verticale.

13. Station de transfert (200) selon l'une des revendications 6 à 12, dans laquelle la piste à taquets (201) comprend deux rails (214) distants entre eux, qui supportent chacun un galet (301) d'un taquet (300), dans lequel l'axe de pivotement (Y) du premier élément de blocage (204) est aligné avec un des rails (214) de la piste à taquets (201), dans laquelle le rail (214) opposé à l'axe de pivotement (Y) présente, en aval de l'interface de transfert (S), un décalage (217) ou une pente qui présente une distance verticale correspondant au passage, au moins de manière discontinue, du taquet (300) de l'orientation de chargement (306) à l'orientation de transport (307).

14. Station de transfert (200) selon l'une des revendications 6 à 13, dans laquelle le deuxième élément de blocage (206) présente une arête d'appui (206) contre laquelle un côté, orienté dans la direction de transport (X), de la portion de chargement (308) du taquet (300), vient en appui et dans laquelle le premier élément de blocage (204) présente une surface d'appui sur laquelle s'appuie un côté, orienté de manière globalement verticale vers le bas, de la portion de chargement (308).

15. Station de transfert (200) selon l'une des revendications 6 à 14, dans laquelle la portion de transport du taquet (300.1) se trouvant sur le contour de fixation s'étend en outre dans un profilé de guidage (208) qui guide latéralement la portion de transport (310) lors du passage du taquet (300) de l'orientation de chargement à l'orientation de transport (306, 307).

16. Station de transfert (200) selon l'une des revendications 9 à 15, dans laquelle le deuxième élément de blocage (206) est conçu pour l'accumulation d'une pluralité de taquets (300) se trouvant en amont du contour de fixation (203).

17. Station de transfert (200) selon l'une des revendications 9 à 16, dans laquelle le premier élément de blocage (204) est conçu de sorte qu'un taquet (300) non chargé se trouvant dans la position de blocage (215) sur le contour de fixation (203) est maintenu contre l'arête d'appui (206) du deuxième élément de blocage (206).

18. Convoyeur suspendu (100) avec une station de transfert (200) selon l'une des revendications précédentes 6 à 17, comprenant un tronçon d'entrée (101) disposé sur un côté d'entrée (211) de la station de transfert (200), pour l'entrée de taquets (300) vides, comprenant en outre un tronçon de sortie (102), raccordé à un côté de sortie (212) de la station de transfert (200), pour la sortie des taquets (300) chargés avec des supports de charges (401), ainsi qu'un convoyeur de supports de charges raccordé au chargeur de supports de charges (400).
